Europäisches Patentamt
European Patent Office
Office européen des brevets

(11) Veröffentlichungsnummer: **0 355 439 A2**

# (12) EUROPÄISCHE PATENTANMELDUNG

(21) Anmeldenummer: 89113660.8

(51) Int. Cl.4: C08F 10/00 , C08F 4/643

(22) Anmeldetag: 25.07.89

(30) Priorität: 29.07.88 DE 3825814

(43) Veröffentlichungstag der Anmeldung: 28.02.90 Patentblatt 90/09

(84) Benannte Vertragsstaaten: BE DE ES FR GB IT NL

(71) Anmelder: HOECHST AKTIENGESELLSCHAFT
Postfach 80 03 20
D-6230 Frankfurt am Main 80(DE)

(72) Erfinder: Winter, Andreas, Dr.
Gundelhardtstrasse 2
D-6233 Kelkheim (Taunus)(DE)
Erfinder: Dolle, Volker, Dr.
Hattersheimer Strasse 15
D-6233 Kelkheim (Taunus)(DE)
Erfinder: Antberg, Martin, Dr.
Sachsenring 10
D-6238 Hofheim am Taunus(DE)
Erfinder: Rohrmann, Jürgen, Dr.
Die Ritterwiesen 10
D-6237 Liederbach(DE)
Erfinder: Spaleck, Walter, Dr.
Sulzbacher Strasse 63
D-6237 Liederbach(DE)

## (54) Verfahren zur Herstellung von 1-Olefinpolymeren.

(57) Ein sehr wirksames Katalysatorsystem zur Polymerisation von 1-Olefinen besteht aus einem Aluminoxan und einem Hafnocen, welches eine Verbindung der Formel I

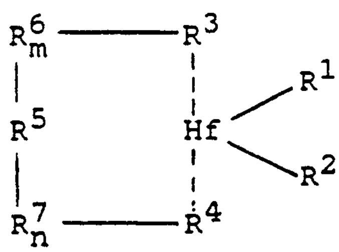

(I)

ist, worin
$R^1$ und $R^2$ Wasserstoffatome, Halogenatome oder Kohlenwasserstoffreste bedeuten und $R^3$ und $R^4$ ein oder mehrkernige Kohlenwasserstoffreste sind, welche mit dem Zentralatom eine Sandwichstruktur bilden können und welche durch eine ein- oder mehrgliedrige oder ein Heteroatom enthaltende Brücke $-R^6_m-R^5-R^7_n-$ miteinander verbunden sind. Das Katalysatorsystem liefert Polymere mit hoher Molmasse und mittlerer bis breiter Molmassenverteilung. Die Breite dieser Molmassenverteilung ist durch die Polymerisationstemperatur variierbar.

EP 0 355 439 A2

Xerox Copy Centre

## Verfahren zur Herstellung von 1-Olefinpolymeren

Die Erfindung bezieht sich auf ein Verfahren zur Herstellung von 1-Olefinpolymeren mit einstellbar breiter Molmassenverteilung und hoher Isotaktizität.

Lösliche Metallocenkatalysatoren auf Basis von Bis(cyclopentadienyl)zirkon-dialkyl oder Bis-(cyclopentadienyl)zirkon-dihalogenid in Kombination mit oligomeren Aluminoxanen sind bekannt. Mit diesem System können Ethylen und Propylen mit mäßiger Aktivität polymerisiert werden, man erhält jedoch kein isotaktisches Polypropylen.

Die Herstellung von isotaktischem Polypropylen gelingt mit Hilfe des Ethylen-bis(4,5,6,7-tetrahydro-1-indenyl) zirkondichlorids zusammen mit einem Aluminoxan in einer Suspensionspolymerisation (vgl. EP-A 185 918). Das Polymer besitzt eine enge Molmassenverteilung($M_w/M_n$ von 1,6 bis 2,6), was für bestimmte Anwendungen, beispielsweise für den Hochleistungsspritzguß, von Vorteil ist.

Es wurde auch eine spezielle Voraktivierungsmethode des Metallocens mit einem Aluminoxan vorgeschlagen, welche zu einer beachtlichen Steigerung der Aktivität des Katalysatorsystems und zu einer deutlichen Verbesserung der Kornmorphologie des Polymeren führt (vgl. DE 37 26 067). Auch diese Polymere besitzen eine enge Molmassenverteilung ($M_w/M_n$ 1,9 bis 2,2).

Weiterhin sind Katalysatoren auf Basis Ethylenbisindenylhafniumdichlorid und Ethylen-bis(4,5,6,7-tetrahydro-1-indenyl)hafniumdichlorid und Methylaluminoxan bekannt, mit denen durch Suspensionspolymerisation höhermolekulare Polypropylene hergestellt werden können (vgl. J. A. Ewen et al., J. Am. Chem. Soc. 109 (1987) 6544).

Mit $M_w/M_n$-werten von 2,1 bis 2,4 haben auch die so hergestellten Polymerprodukte eine enge Molmassenverteilung.

Gleiches gilt auch für die in [≙ HOE 88/F 060] mit rac-Dimethylsilylbisindenylhafniumdichlorid und rac-Phenylmethylbisindenylhafniumdichlorid und Methylaluminoxan hergestellten Polymeren ($M_w/M_n$ = 2,0 bis 2,7).

Während enge Molmassenverteilungen für Anwendungen wie Spritzguß, Präzisionsspritzguß und Faserherstellung vorteilhaft sind, bringt bei Anwendungen, wie Tiefziehen, Extrusion, Hohlkörperblasformen und Folienherstellung eine mittlere bis breite Molmassenverteilung Vorteile. Es ist bekannt, daß die gleichzeitige Polymerisation mittels zwei oder mehr Metallocen-Katalysator-Systemen Polyethylen mit breiter Molmassenverteilung ($M_w/M_n$ bis 7,8) liefert (vgl. EP-A 128 045). Wegen der Verwendung mehrerer Katalysatorsysteme hat ein solches Material jedoch eine verminderte Homogenität. Darüber hinaus liefern die beschriebenen achiralen Katalysatoren bei der Polymerisation von Propylen nur ataktisches Polypropylen, das industriell von nur geringem Interesse ist.

Die Herstellung von Stereoblockpolypropylen mit einer Molmassenverteilung $M_w/M_n$ von 13-15 mit Tetramethylethylenbiscyclopentadienyltitandichlorid und Methylaluminoxan ist bekannt [vgl. DE 3640924].

Dieses achirale Katalysatorsystem ist jedoch nicht in der Lage, hochisotaktisches Polymer zu erzeugen.

Ferner sind die bei technisch relevanten hohen Polymerisationstemperaturen erhaltenen Molmassen vergleichsweise niedrig.

Es bestand daher die Aufgabe, ein technisch brauchbares Verfahren zu finden, das es gestattet, mit einem einzigen Metallocenkatalysator hochisotaktisches Polymeres mit breiter Molmassenverteilung herzustellen.

Es wurde gefunden, daß die Verwendung von Hafnocensystemen bei bestimmten Polymerisationstemperaturen die Herstellung von breit verteilten Polymeren ermöglicht.

Die Erfindung betrifft somit ein Verfahren zur Herstellung eines 1-Olefinpolymers durch Polymerisation eines 1-Olefins der Formel $R\text{-}CH=CH_2$, worin R eine Alkylgruppe mit 1 bis 28 C-Atomen ist, oder Copolymerisation dieser Olefine untereinander oder mit Ethylen bei einer Temperatur von -60 bis 200 °C, bei einem Druck von 0,5 bis 100 bar, in Lösung, in Suspension oder in der Gasphase, in Gegenwart eines Katalysators, welcher aus einem Hafnocen der Formel (I)

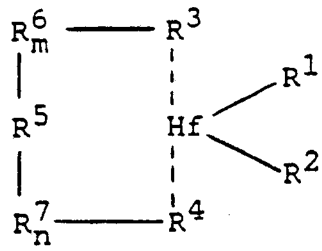

(I)

worin

$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe eine $C_7$-$C_{40}$-Alkylarylgruppe oder eine $C_8$-$C_{40}$-Arylalkenylgruppe bedeuten,

$R^3$ und $R^4$ gleich oder verschieden sind und einen ein oder mehrkernigen Kohlenwasserstoffrest, welcher mit dem Zentralatom eine Sandwichstruktur bilden kann, bedeuten,

$R^5$

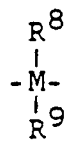 , 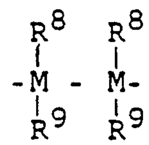 , 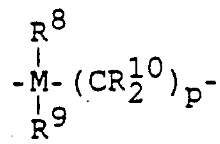 , 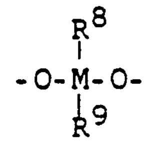 ,

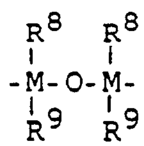 , 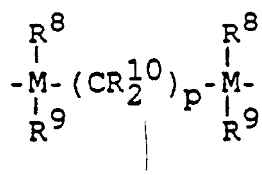 , 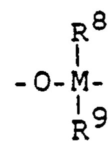 , 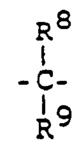 ,

$=BR^8$, $=AlR^8$, -Ge-, -Sn-, -O-, -S-, -S-S-, $=S=O$, $=SO_2$, $=NR^8$, $=PR^8$, $=C=O$ oder $=P(O)R^8$ bedeutet, wobei

$R^8$, $R^9$ und $R^{10}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_1$-$C_{10}$-Alkoxygruppe, eine $C_6$-$C_{10}$-Arylgruppe, eine $C_6$-$C_{10}$-Fluorarylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder

$R^8$ und $R^9$ oder $R^8$ und $R^{10}$ jeweils zusammen mit den sie verbindenden Atomen einen Ring bilden,

M Silizium, Germanium oder Zinn und p 1, 2 oder 3 bedeuten, $R^6$ und $R^7$ gleich oder verschieden sind und eine Gruppe $=CR^8R^9$ bedeuten, wobei $R^8$ und $R^9$ die obengenannte Bedeutung haben,

m und n gleich oder verschieden sind und null, 1 oder 2 bedeuten, wobei $m+n$ null, 1 oder 2 ist, und einem Aluminoxan der Formel (II)

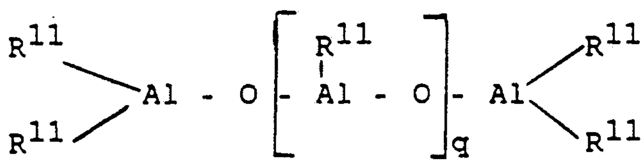

(II)

für den linearen Typ und/oder der Formel (III)

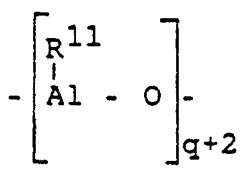

(III)

für den cyclischen Typ, wobei in den Formeln (II) und (III) $R^{11}$ eine $C_1$-$C_6$-Alkylgruppe bedeutet und q eine ganze Zahl von 2 bis 50 ist, besteht, dadurch gekennzeichnet, daß die Polymerisation bei einer Temperatur durchgeführt wird, bei welcher das erhaltene Polymere eine bimodale Molmassenverteilung aufweist.

Für das erfindungsgemäße Verfahren können verschiedene Übergangsmetallkomponenten eingesetzt werden.

Diese sind stereorigide, chirale Hafnocene der Formel (I)

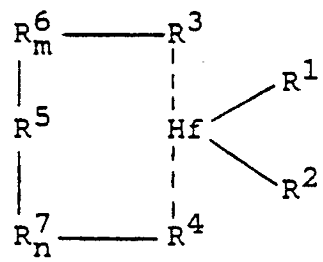

(I)

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden, vorzugsweise gleich, und bedeuten einen ein- oder mehrkernigen Kohlenwasserstoffrest, welcher zusammen mit dem Zentralatom eine Sandwichstruktur bilden kann. Beispiele für derartige Reste sind die Indenyl-, Tetrahydroindenyl- oder Cyclopentadienylgruppe und Heteroaromatenliganden. $R^5$ ist

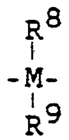 , 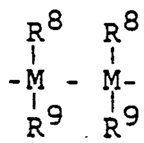 , 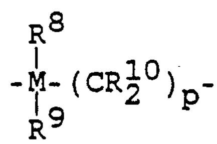 , 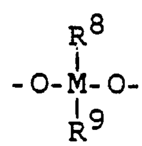 ,

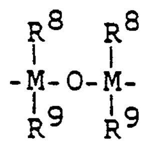 , 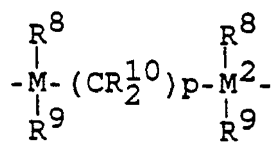 , 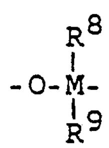 , 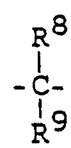 ,

$=BR^8$, $=AlR^8$, -Ge-, -Sn-, -O-, -S-, -S-S-, $=S=O$, $=SO_2$, $=NR^8$, $=PR^8$, $=C=O$ oder $=P(O)R^8$, wobei $R^8$, $R^9$ und $R^{10}$ gleich oder verschieden sind und ein Wasserstoffatom, ein Halogenatom, vorzugsweise Fluor, eine $C_1$-$C_{10}$-, vorzugsweise $C_1$-$C_4$-Alkylgruppe, eine $C_1$-$C_{10}$-, vorzugsweise $C_1$-$C_3$-fluoralkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Fluorarylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten oder $R^8$ und $R^9$ oder $R^8$ und $R^{10}$ bilden jeweils zusammen mit den sie verbindenden Atomen einen Ring. M ist Si, Ge oder Sn und p ist 1, 2 oder 3,

$R^5$ ist vorzugsweise $=SiR^8R^9$, -S-, $=S=O$ oder $=PR^8$,

$R^6$ und $R^7$ sind gleich oder verschieden und bedeuten eine Gruppe $=CR^8R^9$, worin $R^8$ und $R^9$ die obengenannte Bedeutung haben,

m und n sind gleich oder verschieden und bedeuten null, 1 oder 2, wobei m+n null, 1 oder 2 ist. Vorzugsweise sind m und n null oder 1.

Die Hafnocene werden als Racemat zur Herstellung von hochisotaktischen Poly-1-olefinen eingesetzt. Verwendet werden kann aber auch die reine R- oder S-Form. Mit diesen reinen stereoisomeren Formen ist optisch aktives Polymeres herstellbar. Abgetrennt werden muß jedoch die meso-Form der Metallocene, da das polymerisationsaktive Zentrum (das Metallatom) in diesen Verbindungen wegen Spiegelsymmetrie am

Zentralmetall nicht mehr chiral ist und daher kein hochisotaktisches Polymeres erzeugen kann. Dies gilt jedoch nicht, wenn die meso-Form unter Polymerisationsbedingungen in eine chirale Spezies überführt werden kann.

Die Trennung der Stereoisomeren ist im Prinzip bekannt.

Die vorstehend beschriebenen Metallocene können nach folgendem Reaktionsschema hergestellt werden:

$$H_2R^3 + ButylLi \rightarrow HR^3Li$$
$$H_2R^4 + ButylLi \rightarrow HR^4Li$$
$$\xrightarrow{X-R^6_m-R^5-R^7_n-X} HR^3-R^6_m-R^5-R^7_n-R^4H$$

(X = Cl, Br, J, O-Tosyl) $HR^3-R^6_m-R^5-R^7_n-R^4H + 2\ ButylLi \rightarrow LiR^3-R^6_m-R^5-R^7_n-R^4Li$

$LiR^3-R^6_m-R^5-R^7_n-R^4Li$

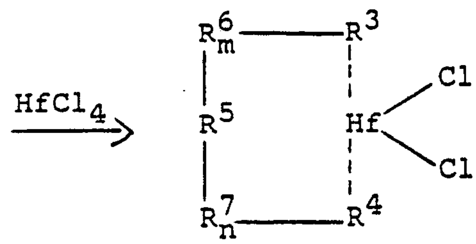


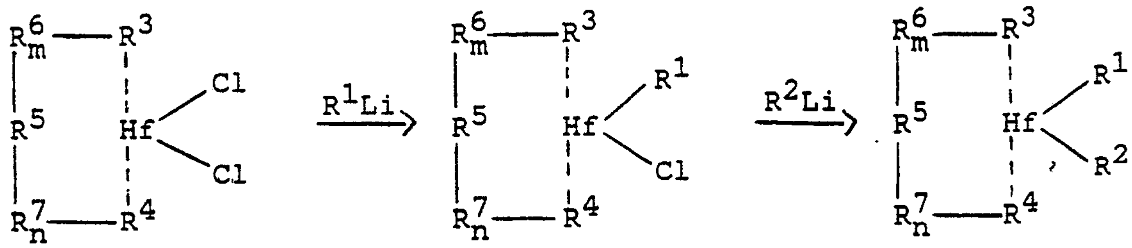


Die besonders bevorzugt eingesetzten Metallocenverbindungen sind rac-Bisindenyl(dialkylsilyl)-hafniumdichloride, rac-Bisindenyl(arylalkylsilyl)-hafniumdichloride und rac-Bisindenyl(alkylen)-hafniumdichloride.

Der Aktivator ist ein Aluminoxan der Formel (II)

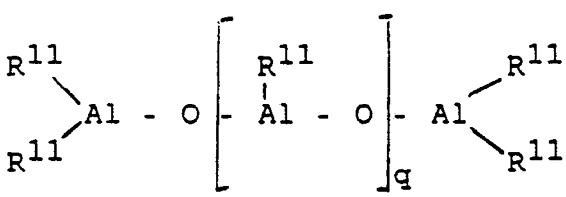
(II)

für den linearen Typ und/oder der Formel (III)

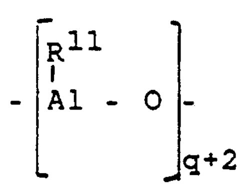
(III)

für den cyclischen Typ. In diesen Formeln bedeuten $R^{11}$ eine $C_1$-$C_6$-Alkylgruppe, vorzugsweise Methyl,

Ethyl oder Isobutyl, insbesondere Methyl, und q eine ganze Zahl von 2 bis 50, bevorzugt 15 bis 40.

Das Aluminoxan kann auf verschiedene Art und Weise hergestellt werden.

Bei einem der Verfahren wird fein gepulvertes Kupfersulfatpentahydrat in Toluol aufgeschlämmt und in einem Glaskolben unter Inertgas bei etwa -20° C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die Reaktionsmischung 24 bis 48 Stunden bei Zimmertemperatur belassen, wobei gegebenenfalls gekühlt werden muß, damit die Temperatur nicht über 30° C ansteigt. Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100° C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 -vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3 \cdot 18H_2O$ und $Al_2(SO_4)_3 \cdot 16H_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind. Der genaue molekulare Aufbau der Aluminoxane ist nicht genau bekannt, die obigen Formeln II und III geben daher nur den ungefähren Aufbau wieder.

Es wird bevorzugt, das Metallocen vor dem Einsatz in der Polymerisationsreaktion mit einem Aluminoxan der Formel (II) und/oder (III) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff.

Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78° C bis 100 °C, vorzugsweise 0 bis 70° C.

Eine deutlich längere Voraktivierung ist möglich, sie wirkt sich normalerweise jedoch weder aktivitätssteigernd noch aktivitätsmindernd aus, kann jedoch zu Lagerzwecken durchaus sinnvoll sein.

Vorzugsweise wird das gleiche Aluminoxan zur Voraktivierung und zur Polymerisation verwendet.

Der erfindungsgemäß zu verwendende Katalysator wird zur Polymerisation von 1-Olefinen der Formel $R\text{-}CH=CH_2$, in der R einen Alkylrest mit 1 bis 28 C-Atomen, vorzugsweise 1 bis 10 C Atomen, insbesondere einem C-Atom bedeutet, eingesetzt, beispielsweise Propylen, Buten-(1), Hexen-(1), 4-methylpenten-(1), Octen-(1). Besonders bevorzugt ist Propylen. Ferner wird der Katalysator auch zur Copolymerisation dieser Olefine untereinander und mit Ethylen eingesetzt, wobei mehr als 50 Gew.-% Ethylen einpolymerisiert werden können.

Die Polymerisation wird in bekannter Weise in Lösung, in Suspension oder in der Gasphase, kontinuierlich oder diskontinuierlich ein- oder mehrstufig bei einer Temperatur von -60 bis 200° C, vorzugsweise -20 bis 120, insbesondere 0 bis 80° C, durchgeführt. Durch Wahl der Polymerisationstemperatur in diesem Bereich läßt sich die Breite der Molmassenverteilung einstellen.

Gelpermeationschromatographische Untersuchungen (GPC) von bei 20 bis 100° C Polymerisationstemperatur hergestellten Polymerproben zeigen, daß mit steigender Polymerisationstemperatur die zunächst enge Molmassenverteilung des Polymerproduktes immer breiter wird und durch weiteres Anwachsen des hochmolekularen Anteils bei einer für das jeweilige Hafnocen typischen Polymerisationstemperatur schließlich eine ausgeprägt breite bimodale Verteilung vorliegt. Bei noch höherer Polymerisationstemperatur verschwindet dann der niedermolekulare Teil und die Molmassenverteilung wird wieder monomodal und

eng.

Die Polymerisationstemperatur, bei der eine optimal bimodale und somit maximal breite Molmassenverteilung des Polymeren vorliegt, muß somit für jedes Hafnocen individuell ermittelt werden.

Bei niedrigeren bzw. höheren Polymerisationstemperaturen können dann entsprechend weniger breite Verteilungen eingestellt werden. Bevorzugt wird dabei die höhere Polymerisationstemperatur gewählt, da hier eine höhere Polymerisationsaktivität des Hafnocens und eine höhere Molmasse der hergestellten Polymerprodukte erzielbar sind.

Der Druck beträgt 0,5 bis 100 bar. Bevorzugt ist die Polymerisation in dem technisch besonders interessanten Druckbereich von 5 bis 60 bar.

Dabei wird die Metallocenverbindung in einer Konzentration, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Es ist vorteilhaft, das Aluminoxan vor Zugabe des Metallocens in das Polymerisationssystem erst einige Minuten zusammen mit dem Polymerisationsmedium, z.B. flüssigem Propylen, zu rühren. Die Rührzeit beträgt vorzugsweise 10 bis 30 Minuten. Es kann jedoch ohne größere Einbußen auch kürzere Zeit gerührt werden, eine längere Rührzeit hat auf das Ergebnis der Polymerisation keine nennenswerte Wirkung.

Wird die Polymerisation als Suspensionspolymerisation durchgeführt, wird in einem für das Ziegler-Niederdruckverfahren gebräuchlichen inerten Lösemittel gearbeitet. Beispielsweise in einem aliphatischen oder cycloaliphatischen Kohlenwasserstoff; als solcher sei beispielsweise Butan, Pentan, Hexan, Heptan, Isobutan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt.

Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Die mittels des erfindungsgemäßen Verfahrens hergestellten Polymeren weisen eine hohe Molmasse, eine hohe Isotaktizität und eine variierbar breite Molmassenverteilung $M_w/M_n$ von 4 bis 15, vorzugsweise 4 bis 10 auf.

Die nachfolgenden Beispiele sollen die Erfindung erläutern. Es bedeuten

VZ = Viskositätszahl in $cm^3/g$,

$M_w$ = Molmassengewichtsmittel in g/mol,

$M_n$ = Molmassenzahlenmittel in g/mol,

$M_w/M_n$ = Molmassenverteilung ermittelt durch Gelpermeationschromatographie (GPC) und

II = Isotaktischer Index, bestimmt durch $^{13}C$-NMR-spektroskopie

**Beispiel 1**

Ein trockener 16 $dm^3$-Kessel wurde mit Stickstoff gespült und mit 10 $dm^3$ flüssigem Propylen befüllt. Dann wurden 30 $cm^3$ toluolische Methylaluminoxanlösung (entsprechend 68 mmol Al, mittlerer Oligomerisierungsgrad n = 20) zugegeben und der Ansatz bei 30 °C 15 Minuten gerührt. Parallel dazu wurden 22,4 mg (0,044 mmol) rac-Ethylenbisindenylhafniumdichlorid in 15 $cm^3$ toluolischer Methylaluminoxanlösung (34 mmol Al) gelöst und durch 15 minütiges Stehenlassen voraktiviert.

Die Lösung wurde dann in den Kessel gegeben. Das Polymerisationssystem wurde auf eine Temperatur von 65 °C gebracht und 8 h bei dieser Temperatur gehalten. Es wurden 2,15 kg Polypropylen erhalten.

Die Aktivität des Metallocens betrug somit 12,0 kg PP/g Metallocen x h.

$M_w$ = 85700, $M_n$ = 13400, $M_w/M_n$ = 6,4;

II = 95,7 %.

Die Molmassenverteilung der Polymerprobe war bimodal.

**Vergleichsbeispiel A**

Es wurde wie in Beispiel 1 verfahren, jedoch wurde 1 h bei 70 °C polymerisiert. Es wurden 0,4 kg Polypropylen erhalten. Die Aktivität des Metallocens betrug somit 17,9 kg PP/g Metallocen x h.

$M_w$ = 173000, $M_n$ = 54600, $M_w/M_n$ = 3,2, die Molmassenverteilung der Polymerprobe war monomodal.

**Vergleichsbeispiel B**

Es wurde wie in Beispiel 1 gearbeitet, jedoch wurden 24,9 mg (0,049 mmol) des Metallocens eingesetzt und die Polymerisationstemperatur betrug 60 °C.
2,36 kg Polypropylen wurden erhalten. Die Aktivität des Metallocens betrug 11,8 kg PP/g Metallocen x h.
$M_w$ = 65500, $M_n$ = 18400, $M_w/M_n$ = 3,6, die Molmassenverteilung der Polymerprobe war monomodal.

**Vergleichsbeispiele C-E**

Analog zu Beispiel 1 wurden bei 50, 40 und 30 °C Polymerisationen durchgeführt. Die Molmassenverteilungen waren monomodal, $M_w/M_n$ betrugen 3,3, 2,9 und 2,6.

**Beispiel 2**

Ein trockener 16 $dm^3$-Kessel wurde mit Stickstoff gespült und mit 10 $dm^3$ flüssigem Propylen befüllt. Bei 30 °C wurden 45 $cm^3$ toluolische Methylaluminoxanlösung (entsprechend 102 mmol Al, mittlerer Oligomerisierungsgrad n = 20) und 53,6 mg (0,11 mmol) rac-Ethylenbisindenylhafniumdichlorid gelöst in 50 $cm^3$ Toluol, zugegeben. Das Polymerisationsystem wurde dann 5 h bei 60 °C gehalten. Es wurden 0,37 kg Polypropylen erhalten. Die Aktivität des Metallocens betrug somit 1,4 kg PP/g Metallocen x h.
$M_w$ = 140000, $M_n$ = 26300, $M_w/M_n$ = 5,3, die Molmassenverteilung der Polymerprobe war bimodal.

Beispiel 2 unterscheidet sich von Beispiel 1 durch die Weglassung der Voraktivierung des Metallocens in der toluolischen Aluminoxanlösung.
Die Gesamtaluminoxanmenge wurde dabei direkt in das Polymerisationssystem gegeben.

**Beispiel 3**

Es wurde wie in Beispiel 1 gearbeitet, jedoch wurden 51 mg (0,095 mmol) rac-Dimethylsilylbisindenylhafniumdichlorid eingesetzt. Die Polymerisationstemperatur betrug 65 °C und die Polymerisationsdauer war 5 h.

2,1 kg Polypropylen wurden erhalten.
Die Aktivität des Metallocens betrug 8,2 kg PP/g Metallocen x h.
$M_w$ = 179000, $M_n$ = 33770, $M_w/M_n$ = 5,3, die Molmassenverteilung der Polymerprobe war bimodal.

**Beispiel 4**

Es wurde wie in Beispiel 1 verfahren, jedoch wurden 100 mg (0,168 mmol) rac-Phenylmethylsilylbisindenylhafniumdichlorid eingesetzt. Die Polymerisationstemperatur betrug 65 °C, die Polymerisationszeit 5 h.
Es wurden 0,45 kg Polypropylen erhalten. Die Aktivität des Metallocens betrug 0,9 kg PP/g Metallocen x h.
$M_w$ = 229000, $M_n$ = 49400, $M_w/M_n$ = 4,6, die Molmassenverteilung der Polymerprobe war bimodal.

**Vergleichsbeispiel F**

Es wurde wie in Beispiel 4 verfahren, die Polymerisationstemperatur betrug jedoch 70 °C.

1,28 kg Polypropylen wurden erhalten. Die Aktivität des Metallocens betrug 2,6 kg PP/g Metallocen x h.
$M_w$ = 234000, $M_n$ = 83600, $M_w/M_n$ = 2,8, die Molmassenverteilung der Polymerprobe war monomodal.

**Beispiel 5**

Ein trockener 16 $dm^3$-Kessel wurde mit Stickstoff gespült und mit 10 $dm^3$ flüssigem Propylen befüllt.

Dann wurden 17,6 $cm^3$ toluolische Methylaluminoxanlösung (entsprechend 40 mmol Al, mittlerer Oligomerisierungsgrad n = 20) zugegeben und der Ansatz bei 30 °C 15 Minuten gerührt. Parallel dazu wurden 72,5 mg (0,11 mmol) rac-Diphenylsilylbisindenyl-$HfCl_2$ in 8,8 $cm^3$ toluolischer Methylaluminoxanlösung (20 mmol Al) gelöst und durch 15-minütiges Stehenlassen voraktiviert.
Die Lösung wurde dann in den Kessel gegeben. Das Polymerisationssystem wurde auf eine Temperatur von 65 °C gebracht und 5 h bei dieser Temperatur gehalten. Es wurden 0,55 kg Polypropylen erhalten. Somit betrug die Aktivität 1,51 kg PP/g Metallocen•h.
$M_w$ = 167 000, $M_w/M_n$ = 4,9, $M_n$ = 34 100.
Die Molmassenverteilung der Polymerprobe war bimodal.

## Ansprüche

1. Verfahren zur Herstellung eines 1-Olefinpolymers durch Polymerisation eines 1-Olefins der Formel $R-CH=CH_2$, worin R eine Alkylgruppe mit 1 bis 28 C-Atomen ist, oder Copolymerisation dieser Olefine untereinander oder mit Ethylen bei einer Temperatur von -60 bis 200 °C, bei einem Druck von 0,5 bis 100 bar, in Lösung, in Suspension oder in der Gasphase, in Gegenwart eines Katalysators, welcher aus einem Hafnocen der Formel (I)

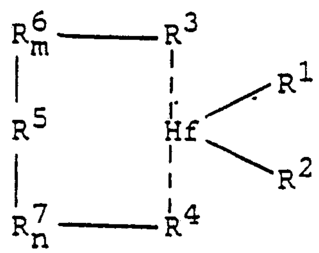 (I)

worin
$R^1$ und $R^2$ gleich oder verschieden sind und ein Wasserstoffatom, ein Halogenatom, eine $C_1$-$C_{10}$-Alkylgruppe, eine $C_1$-$C_{10}$-Alkoxygruppe, eine $C_6$-$C_{10}$-Arylgruppe, eine $C_6$-$H_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe oder eine $C_8$-$C_{40}$-Arylalkenylgruppe bedeuten,
$R^3$ und $R^4$ gleich oder verschieden sind und einen ein-oder mehrkernigen Kohlenwasserstoffrest, welcher mit dem Zentralatom eine Sandwichstruktur bilden kann, bedeuten,
$R^5$

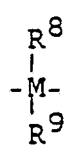 , 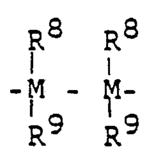 , 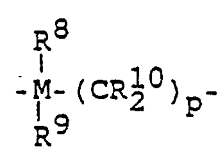 , 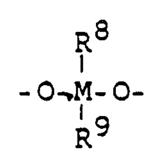 ,

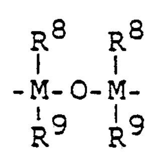 , 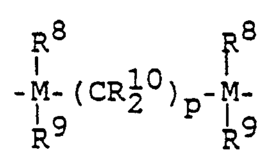 , 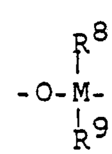 , 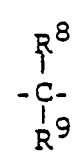

$=BR^8$, $=AlR^8$, -Ge-, -Sn-, -O-, -S-, -S-S-, =S=O, $=SO_2$, $=NR^8$, $=PR^8$ oder $=P(O)R^8$ bedeutet, wobei
$R^8$, $R^9$ und $R^{10}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_1$-$C_{10}$-Alkoxygruppe, eine $C_6$-$C_{10}$-Arylgruppe, eine $C_6$-$C_{10}$-Fluorarylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder
$R^8$ und $R^9$ oder $R^8$ und $R^{10}$ jeweils zusammen mit den sie verbindenden Atomen einen Ring bilden,
M Silizium, Germanium oder Zinn und p 1, 2 oder 3 bedeuten, $R^6$ und $R^7$ gleich oder verschieden sind und

eine Gruppe $=CR^8R^9$ bedeuten, wobei $R^8$ und $R^9$ die obengenannte Bedeutung haben, m und n gleich oder verschieden sind und null, 1 oder 2 bedeuten, wobei m+n null, 1 oder 2 ist, und einem Aluminoxan der Formel (II)

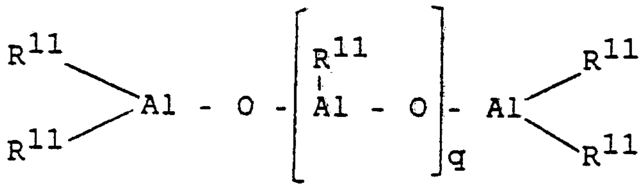

(II)

für den linearen Typ und/oder der Formel (III)

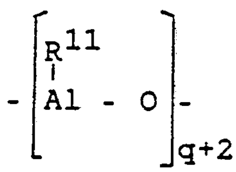

(III)

für den cyclischen Typ, wobei in den Formeln (II) und (III) $R^{11}$ eine $C_1$-$C_6$-Alkylgruppe bedeutet und q eine ganze Zahl von 2 bis 50 ist, besteht, dadurch gekennzeichnet, daß die Polymerisation bei einer Temperatur durchgeführt wird, bei welcher das erhaltene Polymere eine bimodale Molmassenverteilung aufweist.

2. Verfahren nach Anspruch 1, dadurch gekennzeichnet, daß die Masse-Polymerisation bei Verwendung von Ethylenbisindenylhafniumdichlorid bei einer Temperatur von 60 bis 70 °C durchgeführt wird.

3. Verfahren nach Anspruch 1, dadurch gekennzeichnet, daß die Masse-polymerisation bei Verwendung von Dimethylsilylbisindenylhafniumdichlorid bei einer Temperatur von 60 bis 70 °C durchgeführt wird.

4. Verfahren nach Anspruch 1, dadurch gekennzeichnet, daß die Masse-polymerisation bei Verwendung von Phenylmethylsilylbisindenylhafniumdichlorid bei einer Temperatur von 60 bis 70 °C durchgeführt wird.

5. Verfahren nach Anspruch 1, dadurch gekennzeichnet, daß die Übergangsmetallkomponente vor der Polymerisation mit einem Aluminoxan der Formel (II) und/oder (III) bei einer Temperatur von -78 bis 100 °C 5 Minuten bis 60 Stunden voraktiviert wird.

6. Verfahren nach Anspruch 1, dadurch gekennzeichnet, daß die Übergangsmetallkomponente ein rac-Bisindenyl(alkylen)hafniumdichlorid rac-Bisindenyl(arylalkylsilyl)hafniumdichlorid oder rac-Bisindenyl-(dialkylsilyl)hafniumdichlorid und das Aluminoxan ein Methylaluminoxan ist.